# EUROPEAN PATENT SPECIFICATION

(11) **EP 0 854 999 B1**
(45) Date of publication and mention of the grant of the patent: **07.08.2002**
(21) Application number: 96935140.2
(22) Date of filing: 31.10.1996
(51) Int. Cl.: F16L 39/04, F16L 17/10, B63B 22/02

(54) **FLUID SWIVEL CONNECTOR**
DREHVERBINDER FÜR FLÜSSIGKEITEN
RACCORD TOURNANT DE FLUIDE

(30) Priority: 01.11.1995 GB 9522325
(43) Date of publication of application: 29.07.1998
(73) Proprietor: FRAMO ENGINEERING A/S, 5049 Sandsli (NO)
(72) Inventor: ERSTAD, Jostein, N-5307 Askoy Bergen (NO)
(74) Representative: Freeman, Jacqueline Carol
(86) International application number: GB9602669
(87) International publication number: WO9716674

(56) References cited:
- FR-A- 2 562 201
- US-A- 4 111 467
- US-A- 4 126 336
- US-A- 4 561 679
- US-A- 4 647 076
- MARINE ENGINEERS REVIEW, May 1989, page 42/43 XP000026656 "REVOLUTION IN FLUID SWIVEL DESIGN"

## Description

### FIELD OF THE INVENTION

The present invention relates to a fluid flow connector, particularly for high pressure applications.

Such connectors are needed for example in transferring oil or gas from offshore drilling installations onto transport or storage vessels.

The connectors may be a part of floating buoys carrying a riser from an undersea extraction point to which an oil tanker links up to load the oil or gas. Alternatively the connector may be fixed on the deck of the transport vessel. It is also possible for one part of the connector to be normally carried on the vessel and to be releasably connected at appropriate times to the other part in the floating buoy.

Relative movement between the parts of the connector is important for such applications to allow for relative movement of the vessel and the riser in strong winds, high waves or influential currents.

A relative rotational capability is particularly advantageous and the connector may form a swivel joint between conduits. Of course such a swivel joint presents difficulties with regard to ensuring correct and accurate alignment of the ends of corresponding fluid conduits and in sealing the conduit join against leakage.

### BACKGROUND OF THE INVENTION

One such flow connector is known from US 4 828 292 and comprises two concentric hollow cylindrical parts, relatively rotatable with respect to each other and having cooperating aligned annular grooves to form circumferential passages within the connector, delimited by the inner walls of the two cylindrical parts. Inlet and outlet pipes are welded to the inner or outer cylindrical parts as appropriate and connect with the annular circumferential passages. In this way, even with rotational movement of the two parts, the inlet and outlet pipes communicate at all times via the annular passages. Annular ring seals are incorporated on each side of the passages and may be pressurised by a barrier fluid.

However, this known design is difficult and expensive to manufacture with sufficiently accurate tolerances, the welded joints are often prone to failure particularly under the high pressures and in the dirty environment of oil and gas production facilities, and it is a permanent structure once manufactured i.e. it cannot easily be connected and disconnected even for routine maintenance and repair.

US 4 111 467 describes another connector with a central core having longitudinal bores and a plurality of radial passages communicating with respective bores, and the sealing means described for the annular passages are traditional V or U shaped gaskets.

### DISCLOSURE OF THE INVENTION

Accordingly the present invention provides an arrangement for connecting conduits carrying high pressure production fluid so as to allow for relative movement between two members carrying respective connecting ends of the conduits, wherein:
one of the connecting members comprises a central core having a plurality of bores formed longitudinally therein; and
a plurality of passages formed radially of the core, each radial passage communicating with a respective longitudinal bore, the arrangement comprising:
   a plurality of annular passages formed between the connecting members, each annular passage providing a fluid flow path to a respective radial passage in the central core,
   and means for sealing the or each annular passage against leakage of the high pressure production fluid, the sealing means including a sealing member activated by differential pressure and a supply of a barrier fluid to the side of the sealing member which is remote from the production fluid flow.

An arrangement according to the invention is more versatile and more reliable than known connectors.

Preferably one side of the sealing member is subject to the pressure of the high pressure production fluid flowing in the conduits and the other side of the seal is subject to the barrier fluid which is supplied at a higher pressure than that of the production fluid flowing in the conduits.

In a preferred embodiment additional environment seals are provided in the region of the top and bottom of the central core.

The longitudinal bores may be formed in a ring in the core and two such bores can be fluidly connected to each radial passage.

The arrangement preferably uses a sealing arrangement as described and illustrated in applicant's co-pending simultaneously filed application entitled "Sealing Arrangement" GB 2 306 588 A.

A particularly preferred embodiment of the present invention provides an inner and an outer core element having independent bores formed in respective elements, the inner element extending longitudinally beyond the outer core element and connecting with another female connecting member of a smaller diameter to the female connecting member for the outer core.

This improves the capacity of the connector to carry many different fluids simultaneously and independently since it provides the possibility to provide a larger number of bores in the central core. Also bores of different diameters for different fluid flows can be made more easily. Smaller diameter bores are generally used for higher pressure fluid conduits.

Another embodiment of the present invention provides a large diameter lower male connector and a small diameter upper male connector which can be stacked onto the large diameter connector. The lower, large diameter connector has a hollow central section though which pipes are inserted to connect with the bores in the upper, small diameter, connector. This embodiment saves material, and is thus less expensive. Male connectors of different diameters can easily be stacked on top of each other to provide a modularised design or the connectors can be used independently depending on the need of a particular project.

Reference is also made to the applicant's co-pending and simultaneously filed UK applications GB 2 306 595 A entitled "High Pressure Fluid Connector" and GB 2 306 672 A entitled "Monitoring System for Fluid Connector".

For a better understanding of the present invention and to show how the same may be carried into effect, reference will now be made to the accompanying drawings.

### BRIEF DESCRIPTION OF THE DRAWINGS

Figure 1 shows one embodiment of a fluid connector according to the present invention in cross-sectional and in elevational view.
Figure 2 is a cross section through the fluid connector of Figure 1 illustrating one example of an arrangement of bores in the central core.
Figure 3 is a part cross-sectional view of a second embodiment of a fluid connector according to the present invention.
Figure 4 is a cross-section through the fluid connector of Figure 3 along line IV-IV.
Figure 5 is a cross-sectional view of a third embodiment of a fluid connector according to the present invention.
Figure 6 is an enlarged view of part of Figure 5.

### DETAILED DESCRIPTION OF THE DRAWINGS

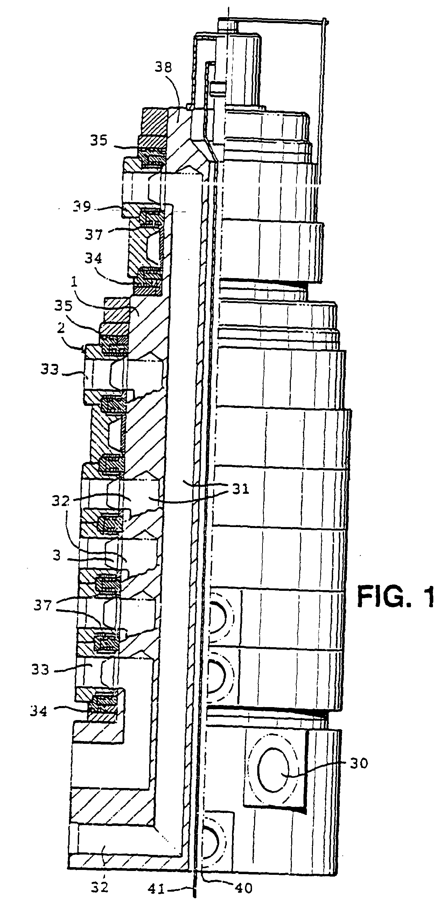

Figure 1 illustrates a high pressure fluid connector. In the left half of the Figure a cross-sectional view is shown. In the cross-sectional view, oppositely directed cross-hatching is used to indicate parts of the connector which are relatively rotational with respect to each other. Thus a male member 1 is denoted by a left to right rising cross-hatching and a female member 2 is denoted by left to right falling cross-hatching. The male member 1 is generally held stationary, for example on a storage or transport vessel to which the oil or gas is being pumped through the connector.

The male core member 1 has several axial bores 31 connecting radial passageways 32 in core element 1 to fluid conduits 33 in the female member 2. The junction of these fluid conduits with the radial passageways 32 in male member 1 is formed as annular grooves 3. In this way the relative rotation of the two members 1 and 2 does not affect the fluid connection between the two.

This junction of the fluid conduits and the passageways is sealed by means of over-pressure double sealing arrangements above and below each junction, coaxial with the annual grooves. These sealing arrangements are indicated generally at 37 and are described in more detail in applicant's co-pending and simultaneously filed British Application GB 2 306 588 A entitled "Sealing Arrangement".

Such a sealing arrangement comprises double pairs of lip-seals each having U-shaped cross-sections and being activated by a high pressure barrier fluid applied to the open side of the sealing ring. The barrier fluid is supplied at a higher pressure to the pressure of the production fluid in the conduit and provides a lubrication for the seal, to facilitate relative rotation of the members 1 and 2 without damage to the seal.

Such a sealing arrangement is provided above and below each annular groove 3.

At the top and bottom of the fluid connector is provided an environment seal 34, 35 which seals a set of fluid carrying conduits against the environment (which will usually but not necessarily exclusively be at atmospheric pressure). Again the environment seal comprises a pair of spaced U-shaped seals activated by pressure differentials.

In the embodiment shown in Figure 1 the core element 1 comprises an additional extension portion 38 extending longitudinally above female member 2, and having a smaller diameter. This extension 38 connects with a second female member 39 in the same way as has been described in relation to the first female member 2 and the main part of the core member 1. That is to say that sealing arrangements 37 as well as environment seal 34, 35 are provided. Such a narrower diameter core extension is useful for particularly high pressure fluid flow.

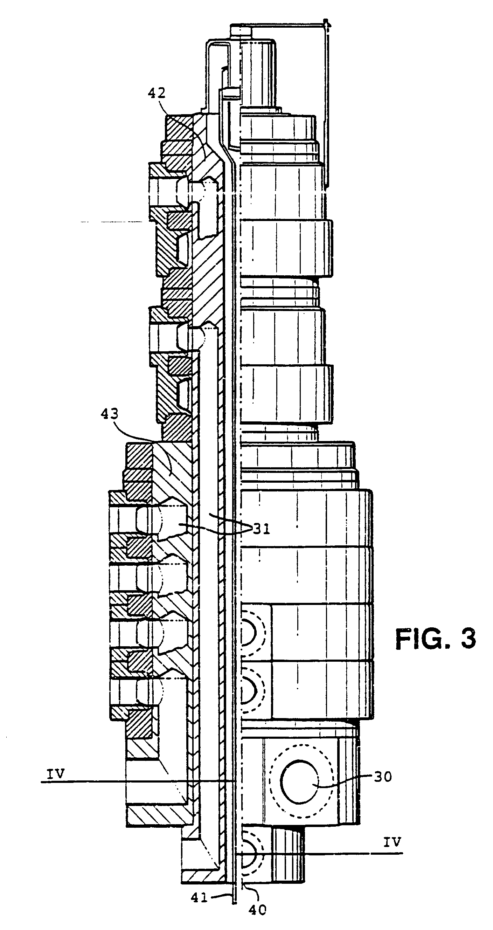

In a further embodiment described later with reference to Figure 3, the core extension 38 may be formed as a separate inner core element which fits coaxially into the outer core element 1.

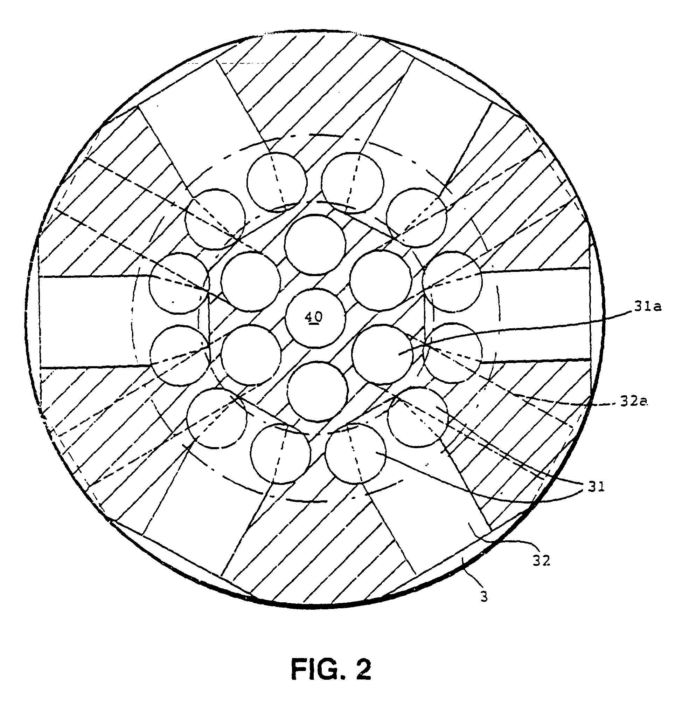

Figure 2 is a cross-section of Figure 1 showing axially bores 31 arranged in concentric rings.

The outer ring of bores 31 connect two at a time to radial passageways 32.

An inner ring of axial bores 31a each connect a respective radial passageway 32a. These are denoted by broken lines to indicate that they are not in the plane of view of Figure 2.

A central axial bore 40 in core 1 carries electrical wires 41 (Figure 1) and/or other support lines and power supplies for the connector and the pipeline.

Figure 3 shows an alternative arrangement to that of Figure 1 where the arrangement is identical except that the male core member 1 is formed of an inner core member 42 and an outer core member 43. All other components are denoted by like reference numbers. Using a male core member which is sectioned in this way is advantageous since it allows for easier manufacture of the connector.

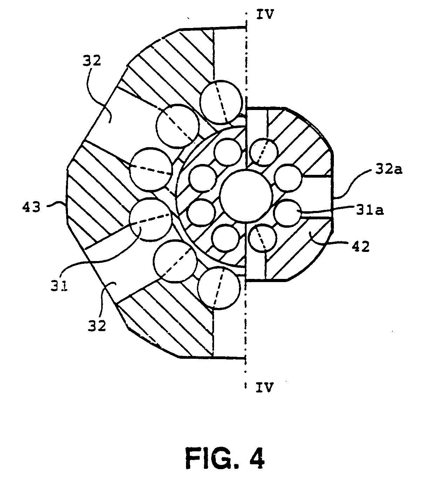

Figure 4 is a cross-section along line IV-IV in Figure 3. This clearly shows the axial conduits 31 in the outer core 43 communicating in pairs with radial passageways 32.

The inner core member 42 has axial bores 31a of a smaller diameter to those in the outer core element. These bores 31a communicate for fluid connection in pairs with radial passageways 32a. Each set of axial bores is arranged in a ring.

The central bore 40 is provided to carry power supply lines or other services.

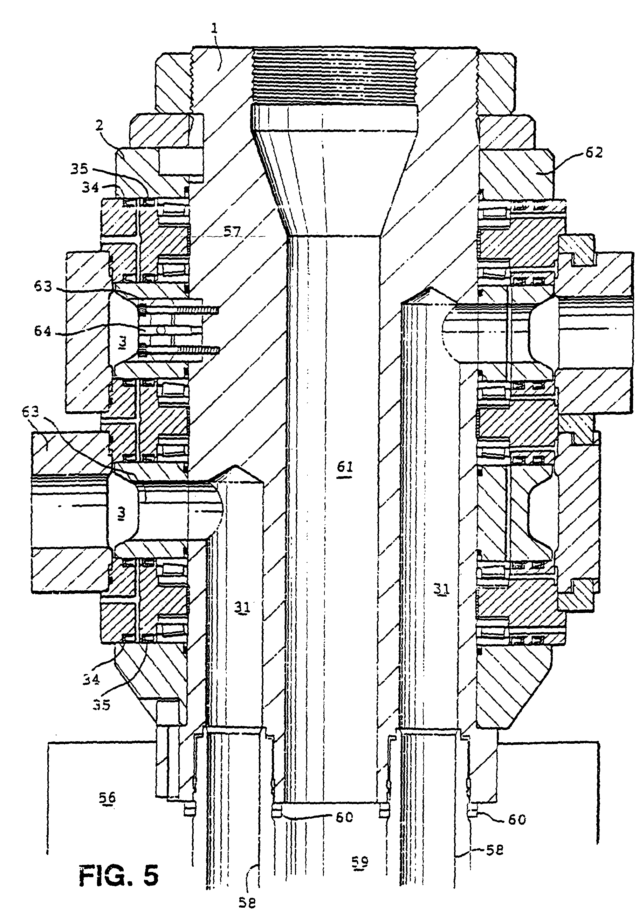

Figure 5 shows a lower, large diameter male connector 56 with an upper small diameter connector 57 stacked on top, each having a hollow central portion 59.

Each of these male connectors (56,57) has longitudinal bores for fluid transport which connect with respective radial passageways, annular grooves and conduits in co-operating female members, as has been described with reference to the Figures 1 and 3 above. The bores and passageways of lower connector 56 are not shown in Figure 5. The bores 31 of the upper connector 57 connect to pipes 58 which are located in the hollow central part 59 of lower connector 56. Seals 60 are arranged at the junction of bores 31 and pipes 58 and these may be of any of a variety of known constructions.

The upper connector 57 also has a hollow central part 61. The upper and lower connectors 56,57 each have a solid core surrounding their hollow centres, through which the longitudinal bores are drilled for transport of fluid.

The upper and lower male connectors each have separate co-operating female connectors. In Figure 5 the lower female connector is not shown but the upper one is indicated at 62.

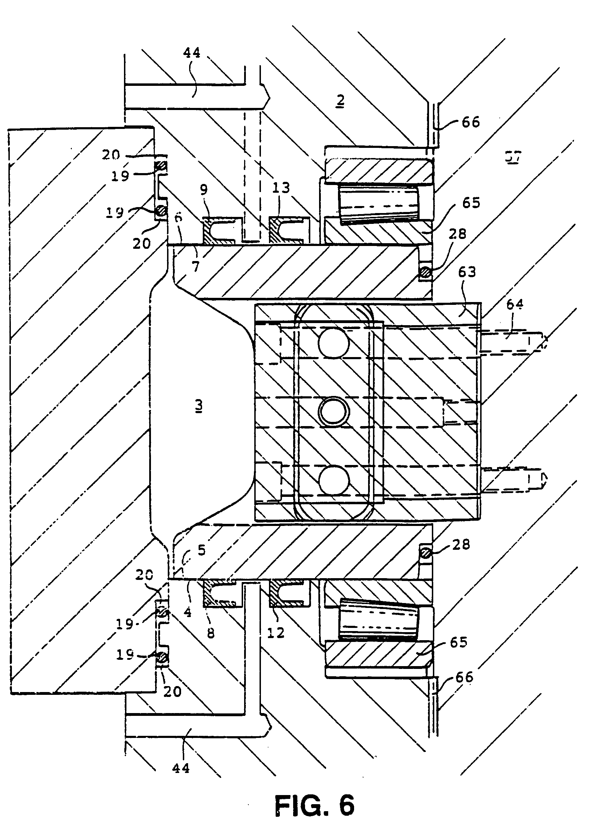

The junction of the fluid carrying conduits between the male and female parts is sealed in a similar way to the system described for the embodiments of Figures 1 and 3, and is also described in applicant's co-pending and simultaneously filed GB 2 306 588 A entitled "Sealing Arrangement". However, in Figure 5, a different arrangement of the parts is used and this is illustrated in larger scale in Figure 6 which is a cross-section through a part of one fluid conduit junction.

The arrangement of parts at this junction will now be described in detail with reference to Figures 5 and 6.

The annular grooves 3 in the embodiment of Figure 5 are formed between the female member 2 and key pieces 63 which are bolted to the core of male member 57 by bolts 64. This makes the male member 57 simpler to construct and the tolerances required for the fluid conduits are easier to achieve in these smaller individual parts.

Above and below each annular groove is a double sealing arrangement each comprising a primary 8,9 and a secondary 12,13 sealing ring in respective grooves. The sealing rings are lip seals with U-shaped cross-sections. They are arranged with the open arms facing away from the fluid path defined by annular groove 3. In this embodiment this is radially inwardly of the connector in contrast to the arrangement of the embodiments described above where the arms face radially outwardly (but still away from the fluid path).

These sealing rings seal the production fluid against leakage in the clearance between relatively moveable surface 4,5 below the groove 3 and between surfaces 6 and 7 above. They are thus known as dynamic seals. They are activated by pressurised barrier fluid applied through channels 44 to the open side to create a pressure differential.

Roller bearings 65 are provided to assist the relative movement between surfaces 4 and 5 and between surfaces 6 and 7. Sliding or needle bearings 66 assist movement between facing vertical surfaces.

Static seals 28 comprising 0-rings 19 and back-up plates 20 are also used in the connector as shown, but these are used between surfaces which have a fixed relationship to each other. These static seals may alternatively comprise U-shaped lip seals pressurised by barrier fluid supplied through drilled communication channels.

Environment seals 34,35 are arranged above and below each section of connector.

## Claims

1. An arrangement for connecting conduits carrying high pressure production fluid so as to allow for relative movement between two members carrying respective connecting ends of the conduits, wherein:
a first one of the connecting members comprises a central core having (1) a plurality of bores (31) formed longitudinally therein; and
a plurality of passages (32) formed radially of the core, each radial passage (32) communicating with a respective longitudinal bore (31),
a plurality of annular passages (3) formed between the connecting members, each annular passage (3) providing a fluid flow path to a respective radial passage (32) in the central core (1),
and means for sealing (37) the or each annular passage (3) against leakage of the high pressure production fluid, the sealing means (37) including a U-shaped sealing member (8, 9, 12, 13) activated by differential pressure, and a supply of a barrier fluid, at a higher pressure than the production fluid, to the side of the sealing member (8, 9, 12, 13) which is remote from the production fluid flow, wherein two longitudinal bores (31) fluidly communicate with each radial passage (32).

2. An arrangement as claimed in claim 1, wherein one side of the sealing member (8, 9, 12, 13) is subject to the pressure of the high pressure production fluid flowing in the conduits and the other side of the seal (8, 9, 12, 13) is subject to the barrier fluid which is supplied at a higher pressure than that of the production fluid flowing in the conduits.

3. An arrangement as claimed in claim 1 or claim 2 further comprising additional environment seals (34, 35) in the region of the top and bottom of the central core (1).

4. An arrangement as claimed in any preceding claim wherein the longitudinal bores (31) are formed in a ring concentrically within the core (1).

5. An arrangement as claimed in any preceding claim wherein the sealing means (37) comprises two seals (8, 9, 12, 13) arranged between each pair of relatively moveable surfaces of the members.

6. An arrangement as claimed in any preceding claim wherein the central core (1) comprises an inner (42) and an outer (43) core element concentrically arranged one with the other, the bores (31a) and radial passages (32a) of the first core element (42) being independent, with respect to the flow of production fluid, from the bores (31) and radial passages (32) of the second core element (43).

7. An arrangement as claimed in claim 6, wherein the inner core element (42) extends longitudinally beyond the outer core element (43) and two second connecting members of different diameters are provided to connect respectively with the inner (42) and outer core elements (43).

8. An arrangement according to any preceding claim wherein the central core (1) comprises stainless steel.

9. An arrangement as claimed in any preceding claim wherein the central core (1) has a hollow section (40) extending axially therethrough.

10. An arrangement as claimed in claim 9 further wherein an additional first connecting member having a smaller diameter than that of the first connecting member is stacked therein so that the longitudinal bores (31) of the additional member fluidly communicates with the hollow section (40) of the first member.

11. An arrangement as claimed in claim 10 comprising pipes in the hollow section (40) which connect hydraulically to the bores (31) of the additional first connecting member.

12. An arrangement as claimed in claim 9, 10, or 11 comprising a plurality of first connecting members and co-operating second connecting members, of differing diameters, the members being stackable to be used together or being usable independently of each other.

## Patentansprüche

1. Anordnung zum Verbinden von Hochdruckproduktionsfluid führenden Leitungen derart, um relative Bewegung zwischen zwei Elementen zu ermöglichen, die jeweilige verbindende Enden der Leitungen tragen, wobei:
ein erstes der Verbindungselemente einen zentralen Kern (1) mit einer Mehrzahl von in Längsrichtung darin ausgebildeten Bohrungen (31) aufweist; und
eine Mehrzahl von Durchgängen (32) radial des Kerns ausgebildet ist, wobei jeder radiale Durchgang (32) mit einer jeweiligen Längsbohrung (31) kommuniziert,
eine Mehrzahl ringförmiger Durchgänge (3) zwischen den Verbindungselementen ausgebildet ist, wobei jeder ringförmige Durchgang (3) einen Fluidströmungsweg zu einem jeweiligen radialen Durchgang (32) in dem zentralen Kern (1) schafft,
und ein Mittel zum Abdichten (37) des oder jedes ringförmigen Durchgangs (3) gegen Auslaufen des Hochdruckproduktionsfluids, wobei das Dichtungsmittel (37) ein U-förmiges Dichtungselement (8, 9, 12, 13) aktiviert durch Druckdifferenz und eine Zuführung eines Sperrfluids bei einem höheren Druck als das Produktionsfluid zu der Seite des Dichtungselements (8, 9, 12, 13) umfasst, welche von dem Produktionsfluidstrom entfernt ist, wobei zwei Längsbohrungen (31) fluidmäßig mit jedem radialen Durchgang (32) kommunizieren.

2. Anordnung nach Anspruch 1, bei der eine Seite des Dichtungselements (8, 9, 12, 13) dem Druck des in den Leitungen fließenden Hochdruckproduktionsfluids ausgesetzt ist, und die andere Seite der Dichtung (8, 9, 12, 13) dem Sperrfluid ausgesetzt wird, das bei einem höheren Druck als dem des in den Leitungen fließenden Produktionsfluids zugeführt wird.

3. Anordnung nach Anspruch 1 oder Anspruch 2, die ferner zusätzliche Umweltdichtungen (34, 35) im Bereich des oberen und unteren Teils des zentralen Kerns (1) aufweist.

4. Anordnung nach einem vorhergehenden Anspruch, bei der die Längsbohrungen (31) in einem Ring konzentrisch innerhalb des Kerns (1) ausgebildet sind.

5. Anordnung nach einem vorhergehenden Anspruch, bei der das Dichtungsmittel (37) zwei Dichtungen (8, 9, 12, 13) aufweist, die zwischen jedem Paar relativ bewegbarer Oberflächen der Elemente angeordnet sind.

6. Anordnung nach einem vorhergehenden Anspruch, bei der der zentrale Kern (1) ein inneres (42) und ein äußeres (43) Kernelement konzentrisch zueinander angeordnet aufweist, wobei die Bohrungen (31a) und radialen Durchgänge (32a) des ersten Kernelements (42) unabhängig in bezug zum Produktionsfluidstrom, von den Bohrungen (31) und radialen Durchgängen (32) des zweiten Kernelements (43) sind.

7. Anordnung nach Anspruch 6, bei der das innere Kernelement (42) sich in Längsrichtung über das äußere Kernelement (43) hinaus erstreckt und zwei zweite Verbindungselemente mit unterschiedlichen Durchmessern vorgesehen sind, um mit dem inneren (42) bzw. äußeren Kernelement (43) verbunden zu werden.

8. Anordnung nach einem vorhergehenden Anspruch, bei der der zentrale Kern (1) Edelstahl aufweist.

9. Anordnung nach einem vorhergehenden Anspruch, bei der der zentrale Kern (1) einen hohlen Abschnitt (40) umfasst, der sich axial durch denselben erstreckt.

10. Anordnung nach Anspruch 9, bei der ferner ein zusätzliches erstes Verbindungselement mit einem kleineren Durchmesser als dem des ersten Verbindungselements darin so gestapelt ist, dass die Längsbohrungen (31) des zusätzlichen Elements fluidmäßig mit dem hohlen Abschnitt (40) des ersten Elements kommunizieren.

11. Anordnung nach Anspruch 10, die Rohre in dem hohlen Abschnitt (40) aufweist, welche hydraulisch an die Bohrungen (31) des zusätzlichen ersten Verbindungselements angeschlossen sind.

12. Anordnung nach Anspruch 9, 10 oder 11, die eine Mehrzahl erster Verbindungselemente und zusammenwirkender zweiter Verbindungselemente mit unterschiedlichen Durchmessern aufweist, wobei die Elemente stapelbar zur gemeinsamen Verwendung oder unabhängig voneinander verwendbar sind.

## Revendications

1. Agencement pour connecter des conduits acheminant un fluide de production à haute pression de manière à permettre un déplacement relatif entre deux éléments portant des extrémités de connexion respectives des conduits, dans lequel :
un premier des éléments de connexion comprend une âme centrale (1) ayant une pluralité d'alésages (31) formés longitudinalement à l'intérieur de celle-ci ; et
une pluralité de passages (32) formés radialement à l'âme, chaque passage radial (32) communiquant avec un alésage longitudinal respectif (31),
une pluralité de passages annulaires (3) formés entre les éléments de connexion, chaque passage annulaire (3) fournissant un trajet d'écoulement de fluide jusqu'à un passage radial respectif (32) dans l'âme centrale (1),
et un moyen pour étanchéifier (37) le ou chaque passage annulaire (3) contre la fuite du fluide de production à haute pression, le moyen d'étanchéité (37) comportant un élément d'étanchéité en forme de U (8, 9, 12, 13) activé par une pression différentielle, et une alimentation d'un fluide barrière, à une pression supérieure à celle du fluide de production, du côté de l'élément d'étanchéité (8, 9, 12, 13) qui est distant de l'écoulement de fluide de production, dans lequel deux alésages longitudinaux (31) communiquent par fluide avec chaque passage radial (32).

2. Agencement selon la revendication 1, dans lequel un côté de l'élément d'étanchéité (8, 9, 12, 13) est soumis à la pression du fluide de production à haute pression s'écoulant dans les conduits et l'autre côté du joint étanche (8, 9, 12, 13) est soumis au fluide barrière qui est alimenté à une pression supérieure à celle du fluide de production s'écoulant dans les conduits.

3. Agencement selon la revendication 1 ou la revendication 2, comprenant en outre des joints étanches environnementaux supplémentaires (34, 35) dans la région du haut et du bas de l'âme centrale (1).

4. Agencement selon l'une quelconque des revendications précédentes, dans lequel les alésages longitudinaux (31) sont formés en un anneau concentriquement à l'intérieur de l'âme (1).

5. Agencement selon l'une quelconque des revendications précédentes, dans lequel le moyen d'étanchéité (37) comprend deux joints étanches (8, 9, 12, 13) disposés entre chaque paire de surfaces relativement mobiles des éléments.

6. Agencement selon l'une quelconque des revendications précédentes, dans lequel l'âme centrale (1) comprend un élément d'âme interne (42) et un élément d'âme externe (43) disposé concentriquement l'un par rapport à l'autre, les alésages (31a) et passages radiaux (32a) du premier élément d'âme (42) étant indépendants, relativement à l'écoulement du fluide de production, des alésages (31) et des passages radiaux (32) du deuxième élément d'âme (43).

7. Agencement selon la revendication 6, dans lequel l'élément d'âme interne (42) s'étend longitudinalement au-delà de l'élément d'âme externe (43) et deux deuxièmes éléments de connexion de différents diamètres sont fournis en vue de se connecter respectivement aux éléments d'âme interne (42) et externe (43).

8. Agencement selon l'une quelconque des revendications précédentes, dans lequel l'âme centrale (1) comprend de l'acier inoxydable.

9. Agencement selon l'une quelconque des revendications précédentes, dans lequel l'âme centrale (1) a une section creuse (40) s'étendant axialement à travers elle.

10. Agencement selon la revendication 9, dans lequel en outre un premier élément de connexion supplémentaire ayant un diamètre inférieur à celui du premier élément de connexion est empilé à l'intérieur de telle sorte que les alésages longitudinaux (31) de l'élément supplémentaire communiquent par fluide avec la section creuse (40) du premier élément.

11. Agencement selon la revendication 10, comprenant des tuyaux dans la section creuse (40) qui se connectent hydrauliquement aux alésages (31) du premier élément de connexion supplémentaire.

12. Agencement selon la revendication 9, 10, ou 11, comprenant une pluralité de premiers éléments de connexion et de deuxièmes éléments de connexion coopérants, de différents diamètres, les éléments étant empilables pour être utilisés ensemble ou pouvant être utilisés indépendamment les uns des autres.
